# DEMANDE DE BREVET EUROPEEN

(11) **EP 4 197 849 A1**
(43) Date de publication de la demande: **21.06.2023**
(21) Numéro de dépôt: 22212254.1
(22) Date de dépôt: 08.12.2022
(51) Int. Cl.: B60L 53/30, G06Q 50/06

(54) **BORNE DE RECHARGE DE VÉHICULE ÉLECTRIQUE À AFFICHAGE DÉPORTÉ SÉCURISÉ**

(30) Priorité: 17.12.2021 FR 2113851
(71) Demandeur: Chauvin Arnoux Energy, 92160 Antony (FR)
(72) Inventeur: GARNIER, Jean-Eric, 91400 ORSAY (FR); CANDELIER, Xavier, 91300 MASSY (FR)
(74) Mandataire: Cabinet Beau de Loménie

(57) **Abrégé**

Borne de recharge (12) de véhicule électrique comportant un compteur d'énergie électrique comportant des premiers moyens d'authentification (142) permettant à partir d'une clé privée unique et d'un numéro d'identification unique du compteur d'énergie électrique mémorisé dans le compteur d'énergie électrique, de signer un message comportant au moins des index de début et de fin de consommation électrique et de l'adresser conjointement avec un certificat à clé publique incluant une clé publique unique et le numéro d'identification unique à un module de gestion (16) de la borne électrique de recharge comportant des seconds moyens d'authentification (162) permettant à partir de la clé publique unique et du numéro d'identification unique, de garantir l'intégrité et d'authentifier les index de début et de fin de consommation électrique affichés sur un afficheur (164) de la borne de recharge ou tout autre afficheur distant, distinct du compteur d'énergie.

## Description

### Domaine Technique

La présente invention se rapporte au domaine de la recharge des véhicules électriques et concerne plus particulièrement une borne de recharge comportant un compteur d'énergie électrique amélioré permettant de garantir l'intégrité des données de consommation au niveau d'un affichage distant de ce compteur tout en assurant une gestion multi-tarifaire.

### Technique antérieure

Les compteurs d'énergie électrique pouvant être utilisés dans des bornes de recharge électrique sont des équipements certifiés et sécurisés répondant à la directive européenne MID (pour « Measurement Instrument Device ») qui stipule que seul l'afficheur du compteur a valeur légale. Or, au contraire des compteurs d'énergie électrique présents dans les habitations où cet afficheur est accessible et donc parfaitement visible par l'utilisateur, il n'est pas toujours possible dans une borne de recharge d'avoir cet accès direct permettant une lecture visuelle sans avoir à pratiquer une fenêtre dans la borne ou à recourir à des outils spécifiques pour ouvrir cette borne et accéder au compteur.

### Exposé de l'invention

La présente invention a donc pour but principal de permettre un affichage déporté et sécurisé des données de consommation déporté. Un autre but est de permettre cet affichage sécurisé au travers du réseau Internet pour permettre sa visualisation sur un ordinateur, un téléphone portable ou tout autre équipement informatique ou électronique disposant d'un affichage. Encore un autre but est d'assurer une gestion multi-tarifaire.

Ces buts sont atteints par une borne de recharge de véhicule électrique comportant un compteur d'énergie électrique affichant des index de début et de fin de consommation électrique, caractérisée en ce que le compteur d'énergie électrique comporte en outre des premiers moyens d'authentification permettant à partir d'une clé privée unique et d'un numéro d'identification unique de la borne de recharge mémorisée dans le compteur d'énergie électrique, de signer un message comportant au moins les index de début et de fin de consommation électrique et de l'adresser conjointement avec un certificat à clé publique incluant une clé publique unique et le numéro d'identification unique à un module de gestion de la borne électrique de recharge comportant des seconds moyens d'authentification permettant à partir de la clé publique unique et du numéro d'identification unique, de garantir l'intégrité et d'authentifier les index de début et de fin de consommation électrique affichés sur un afficheur de la borne de recharge ou tout autre afficheur distant, distinct du compteur d'énergie électrique.

Ainsi, la communication conjointe du message contenant les informations de consommation, la signature de ce message et le certificat permet de vérifier l'intégrité de ces index et donc d'être sûr qu'ils n'ont pas été modifiés depuis leur chiffrement par le compteur d'énergie électrique.

De préférence, le message échangé entre le compteur et le module de gestion comporte en outre les dates et heures et les codes tarifaires correspondant au début et à la fin de la charge ou de l'injection et peut comporter plusieurs index de consommation électrique supplémentaires avec leurs dates, heures et codes tarifaires associés, afin de gérer une tarification intermédiaire en cas de changement de grille tarifaire en cours de charge ou d'injection, ainsi qu'un champ supplémentaire laissé libre pour ajouter toutes données utiles à l'information de l'utilisateur.

Avantageusement, le message échangé entre le compteur et le module de gestion est transféré sur une liaison de communication série selon un protocole de communication de type ModBus en mode maitre-esclave.

De préférence, le certificat à clé publique est un certificat X509.

Avantageusement, l'afficheur de la borne de recharge est configuré pour afficher les index de début et de fin de consommation sous la forme d'un QR code.

De préférence, le QR code contient également une mention des date et heure de la charge ou de l'injection, un prix du kilowatt-heure en devise locale, un montant de consommation électrique totale pour la charge ou l'injection en kilowatt-heure et un prix de la charge ou de l'injection en devise locale.

Avantageusement, les premiers et seconds moyens d'authentification sont configurés pour générer une signature RSA de 2048 bits.

De préférence, la borne de recharge comporte en outre des moyens de communication pour transférer des données à des équipements distants via un réseau de communication reliant la borne de recharge à ces équipements distants.

Avantageusement, le réseau de communication est un réseau local ou le réseau Internet.

De préférence, les équipements distants sont des serveurs, des ordinateurs, des téléphones portables ou tous autres équipements informatiques ou électroniques.

Avantageusement, les moyens de communication comportent un module de chiffrement configuré pour encapsuler les index de début et de fin de consommation électrique dans un protocole de communication sécurisé de type SSL ou TLS.

L'invention concerne également un terminal mobile destiné à coopérer avec une borne de recharge telle que précitée, le terminal comportant une application dédiée permettant, par la lecture du QR code à l'afficheur de la borne de recharge, un affichage en clair des informations qu'il contient et une authentification des index de début et de fin de consommation électrique relatifs à la charge ou à l'injection effectuée.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif et sur les lesquels :
[Fig. 1] la figure 1 montre dans son environnement une borne de recharge de véhicule électrique conforme à l'invention, et
[Fig. 2] la figure 2 détaille la structure interne de la borne de recharge.

### Description des modes de réalisation

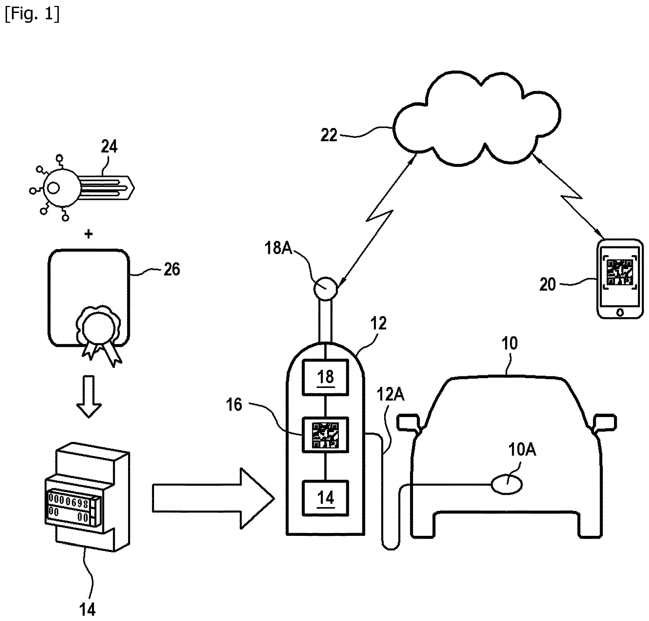

Sur la figure 1, on a représenté un véhicule électrique 10 avec sa prise électrique 10A sur laquelle est branché un câble de recharge 12A d'une borne de recharge de véhicules électriques 12 selon l'invention. Par véhicule électrique, on entend un véhicule automobile, un vélo ou scooter électrique, une trottinette électrique ou tout autre engin électrique de mobilité nécessitant une recharge électrique pour son déplacement.

La borne de recharge comporte un compteur d'énergie électrique 14 qui délivre des informations de consommation électrique et affiche un ou plusieurs index de consommation électrique, et un module de gestion 16 ayant un afficheur qui permet une lecture visuelle déportée de ces informations pour un utilisateur venant recharger son véhicule électrique à la borne de recharge, la charge de son véhicule électrique générant des index de début et de fin de consommation électrique. La borne de recharge comporte également des moyens de communication 18 incluant une antenne d'émission 18A pour d'une part transférer les informations de consommation électrique à des équipements distants 20 via un réseau de communications local ou de type Internet 22 et d'autre part recevoir des informations, par exemple de tarifs applicables, de ces équipements distants. Ces équipements distants sont par exemple des serveurs, des ordinateurs ou des téléphones portables.

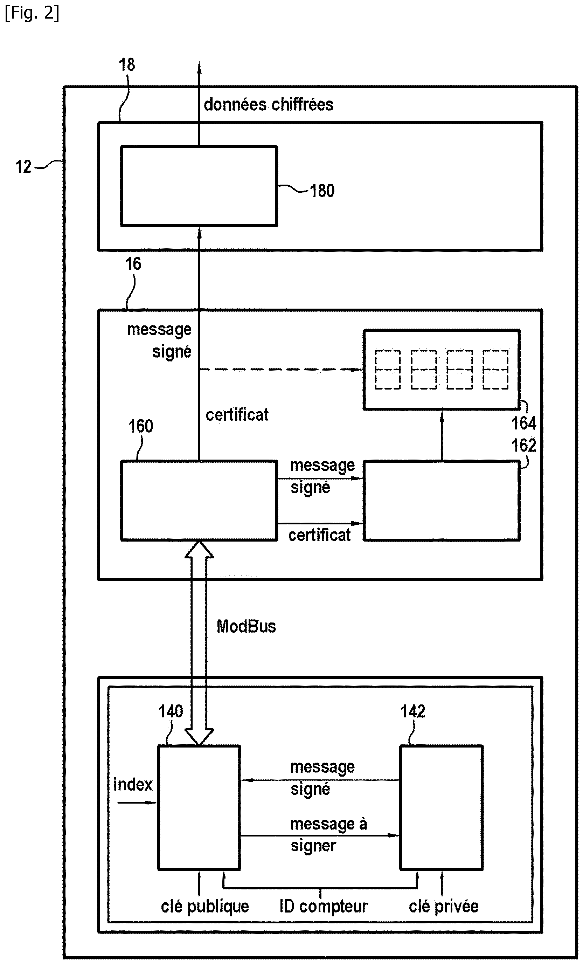

Comme le montre aussi la figure 1, le compteur d'énergie électrique 14 avant d'être mis en place dans la borne de recharge aura été modifié en usine, lors de sa fabrication, pour y intégrer dans une unité de traitement 140 (voir la figure 2) pourvue d'une mémoire additionnelle (tout compteur dispose classiquement déjà d'une mémoire pour le stockage des logiciels de métrologie) un logiciel de chiffrement, une clé unique de chiffrement privé 24 et un certificat à clé publique 26, avantageusement de type X509, comportant une clé unique publique de déchiffrement et un numéro d'identification unique du compteur d'énergie électrique dans lequel ce certificat est stocké.

La figure 2 montre plus en détail la structure de la borne de recharge une fois le compteur d'énergie électrique scellé (plombé) dans la borne de recharge conformément à la directive MID.

Afin d'assurer un affichage déporté des index de consommation électrique au niveau de l'afficheur du module de gestion 16, le compteur d'énergie électrique 14 comporte des premiers moyens d'authentification 142 permettant à partir de la clé privée et du numéro d'identification unique du compteur d'énergie électrique mémorisé dans la mémoire additionnelle de ce compteur d'énergie électrique, de signer un message déterminé comportant notamment les index de début et de fin de consommation électrique et de l'adresser conjointement avec le certificat à clé publique incluant la clé publique et le numéro d'identification unique au module de gestion 16 pour affichage sur son afficheur et communication à l'extérieur de la borne de recharge 12 vers les équipements distants 20.

Plus précisément, le message déterminé échangé entre le compteur 14 et le module de gestion 16 comprend à minima les deux index de consommation électrique en début et fin de charge d'énergie, les dates et heures correspondantes et les deux codes tarifaires (qui peuvent être identiques) de début et de fin de charge. Il peut aussi contenir plusieurs index de consommation électrique supplémentaires (typiquement jusqu'à 32) avec leurs dates, heures et codes tarifaires associés afin de gérer une tarification intermédiaire en cas de changement de grille tarifaire en cours de charge (par exemple au passage d'un jour à l'autre ou des heures pleines aux heures creuses (qui peuvent être différentes selon les fournisseurs d'énergie)). Enfin, un champ du message, typiquement de 454 octets, est laissé libre pour ajouter toute information qui peut être utile pour informer l'utilisateur, pour se conformer à des exigences réglementaires, ou pour les besoins de tel ou tel acteur de l'écosystème de distribution et de facturation de l'énergie par exemple. L'ensemble définit un message de 998 octets.

Si les index de consommation électrique sont fournis par le compteur, les dates et heures de début et fin de charge et les codes tarifaires sont fournis par le module de gestion 16 et plus précisément par un automate 160 de ce module qui communique avec l'unité de traitement 140 du compteur 14 sur une liaison de communication série (de type RS232, 422 ou 485) selon un protocole de communication de type ModBus en mode maitre-esclave. L'automate 160 en tant que module maitre est le seul autorisé à lire et écrire dans le module esclave, l'unité de traitement 140 qui élabore le message à signer pour les moyens d'authentification 142 qui lui retournent le message signé, c'est-à-dire le message en clair suivi de sa signature.

Ce message en clair, sa signature et le certificat à clé publique lus par l'automate 160 sont communiqués à des seconds moyens d'authentification 162 du module de gestion 16 permettant à partir de la clé publique et du numéro d'identification unique reçus du compteur d'énergie électrique 14, d'en vérifier l'intégrité et l'authenticité et de permettre un affichage conforme à la directive MID des index de début et de fin de consommation électrique sur l'afficheur 164 de la borne de recharge 12. Lorsqu'une telle conformité n'est pas exigée, l'affichage des index peut être effectué directement depuis l'automate 160 puisque ceux-ci sont disponibles dans le message en clair reçu du compteur 14. Cet affichage des index peut aussi être effectué de manière permettant une lecture par l'utilisateur sous la forme d'un QR code lisible par un lecteur automatique disponible par exemple sur un téléphone portable de cet utilisateur munie de l'application de lecture adéquate qui renvoi alors vers une page Web ou les informations du message sont accessibles. Dans ce cas, l'afficheur de la borne de recharge comporte bien entendu le générateur approprié (non illustré) pour générer ce QR code à partir des données délivrées par les moyens 162.

Lorsque l'affichage est effectué sous forme d'un QR code, d'autres informations affichées alors sur la borne uniquement en fin de charge, peuvent être ajoutées aux index de début et de fin de consommation électrique. Par exemple, le QR code peut également contenir la mention de la date et de l'heure de début et de fin de la charge, un prix du kilowatt-heure dans la devise locale du lieu de localisation de la borne de recharge (par exemple en Euros en Europe ou en Dollars aux USA), un montant de consommation électrique totale pour la charge en kilowatt-heure et un prix de la charge dans cette même devise locale.

On notera que si les index de consommation électrique dont il a été question précédemment sont des index correspondant à une consommation d'électricité soutirée du réseau électrique pour recharger le véhicule électrique, il doit être noté que ces index peuvent aussi correspondre à une consommation d'électricité injectée dans le réseau électrique depuis la batterie de ce véhicule électrique.

Les moyens d'authentification sont avantageusement configurés pour générer une signature RSA de 2048 bits afin d'authentifier et garantir l'intégrité des informations contenues dans le message signé.

Lorsqu'il est souhaité que les index de consommation électrique et les autres informations soient communiqués à des équipements externes à la borne de recharge 12, par exemple un serveur, un ordinateur, un téléphone portable ou tout autre équipement informatique ou électronique, ceux-ci sont transmis en parallèle de l'afficheur 16 aux moyens de communication 18 dans lequel il est procédé au niveau d'un module de chiffrement 180 à l'encapsulation du message signé dans un protocole de communication sécurisé de type SSL ou TLS de façon à pouvoir résister aux attaques d'écoutes clandestines (« eaves dropping »). De même, le jeu de clés unique pour chaque compteur d'énergie électrique permet de protéger la borne de recharge d'attaques physiques qui ne pourraient compromettre qu'un seul compteur. On notera que, comme il est connu, clés et certificat sont révocables au niveau d'un serveur central (non représenté) auxquelles les bornes de recharge 12 peuvent être en liaison de communication via les moyens de communication 18. Cette communication externe peut aussi se faire par la lecture sur la borne de recharge du QR code au moyen d'un terminal mobile, comme le téléphone portable de l'utilisateur, qui en fait la lecture et peut alors directement authentifier les index de consommation électrique en en vérifiant, avec le certificat alors transmis par ce QR code, la signature au niveau d'une application dédiée comportant ses moyens propres d'authentification sans qu'il soit alors nécessaire de renvoyer à une page Web spécifique comme mentionné précédemment.

On va maintenant décrire un exemple d'une session de charge d'un véhicule électrique. La borne de recharge 12 donne un « top début de charge » au compteur 14 en lui communiquant l'heure et la date et un code tarifaire via une écriture ModBus depuis l'automate 160. Le compteur enregistre les index de consommation électrique soutirée ou injectée, la date et l'heure et le code tarifaire. Si, une fois la charge engagée, un changement de tarif s'avère nécessaire, l'automate donne alors un « top changement de tarif » au compteur en lui communiquant l'heure et la date et un nouveau code tarifaire via une nouvelle écriture ModBus. De même, l'automate peut écrire et ajouter via une autre écriture ModBus des données complémentaires de toutes natures qui seront authentifiées par le compteur MID en fin de session. Enfin, l'automate donne un « top fin de charge » au compteur en lui communiquant l'heure et la date et éventuellement un identifiant de session via une dernière écriture ModBus. Le compteur peut alors par ses moyens d'authentification 142 calculer un « hash » sur le message contenant l'ensemble des données précédentes, puis calculer avec sa clé privée une signature RSA qui authentifie l'ensemble de ce message. L'automate vient alors lire dans le compteur 14 le message contenant les informations de début et fin de charge, de changement(s) de tarif et les données complémentaires, ainsi que la signature du message et le certificat qui identifie le compteur et contient sa clé publique et la borne de recharge peut alors diffuser, via ses moyens de communication 180, ces informations qui contiennent tout ce qui est nécessaire à la facturation, avec la signature et le certificat qui permettent aux équipements distants de vérifier l'auteur et l'intégrité des données communiquées. Elles sont consultables dans le compte que dispose l'utilisateur auprès du fournisseur d'énergie ou du prestataire gérant les bornes de recharge.

Ces données peuvent également être disponibles au travers du QR code affiché sur la borne de recharge, par exemple quelques minutes avant que ne débute la charge ou l'injection suivante.

## Revendications

1. Borne de recharge (12) de véhicule électrique (10) comportant un compteur d'énergie électrique (14) affichant des index de début et de fin de consommation électrique, **caractérisée en ce que** le compteur d'énergie électrique (14) comporte en outre des premiers moyens d'authentification (142) permettant à partir d'une clé privée unique et d'un numéro d'identification unique du compteur d'énergie électrique mémorisé dans le compteur d'énergie électrique (14), de signer un message comportant au moins les index de début et de fin de consommation électrique et de l'adresser conjointement avec un certificat à clé publique incluant une clé publique unique et le numéro d'identification unique à un module de gestion (16) de la borne électrique de recharge (12) comportant des seconds moyens d'authentification (162) permettant à partir de la clé publique unique et du numéro d'identification unique, de garantir l'intégrité et d'authentifier les index de début et de fin de consommation électrique affichés sur un afficheur (164) de la borne de recharge (12) ou tout autre afficheur distant, distinct du compteur d'énergie électrique (14).

2. Borne de recharge selon la revendication 1, dans laquelle le message échangé entre le compteur (14) et le module de gestion (16) comporte en outre les dates et heures et les codes tarifaires correspondant au début et à la fin de la charge ou de l'injection.

3. Borne de recharge selon la revendication 2, dans laquelle le message échangé entre le compteur (14) et le module de gestion (16) comporte en outre plusieurs index de consommation électrique supplémentaires avec leurs dates, heures et codes tarifaires associés, afin de gérer une tarification intermédiaire en cas de changement de grille tarifaire en cours de charge ou d'injection.

4. Borne de recharge selon la revendication 2 ou la revendication 3, dans laquelle le message échangé entre le compteur (14) et le module de gestion (16) comporte en outre un champ supplémentaire laissé libre pour ajouter toutes données utiles à l'information de l'utilisateur.

5. Borne de recharge selon l'une quelconque des revendications 1 à 4, dans laquelle le message échangé entre le compteur (14) et le module de gestion (16) est transféré sur une liaison de communication série selon un protocole de communication de type ModBus en mode maitre-esclave.

6. Borne de recharge selon la revendication 1, dans laquelle le certificat à clé publique est un certificat X509.

7. Borne de recharge selon la revendication 1, dans laquelle l'afficheur (164) de la borne de recharge (10) est configuré pour afficher les index de début et de fin de consommation électrique sous la forme d'un QR code.

8. Borne de recharge selon la revendication 7, dans laquelle le QR code contient également une mention des date et heure de la charge ou de l'injection, un prix du kilowatt-heure en devise locale, un montant de consommation électrique totale pour la charge ou de l'injection en kilowatt-heure et un prix de la charge ou de l'injection en devise locale.

9. Borne de recharge selon l'une quelconque des revendications 1 à 8, dans laquelle les premiers et seconds moyens d'authentification (142, 162) sont configurés pour générer une signature RSA de 2048 bits.

10. Borne de recharge selon l'une quelconque des revendications 1 à 9, comportant en outre des moyens de communication (18) pour transférer des données à des équipements distants (20) via un réseau de communication (22) reliant la borne de recharge (12) à ces équipements distants (20).

11. Borne de recharge selon la revendication 10, dans laquelle le réseau de communication est un réseau local ou le réseau Internet (22).

12. Borne de recharge selon la revendication 10, dans laquelle les équipements distants sont des serveurs, des ordinateurs, des téléphones portables.

13. Borne de recharge selon la revendication 10, dans laquelle les moyens de communication (18) comportent un module de chiffrement (180) configuré pour encapsuler les index de début et de fin de consommation électrique dans un protocole de communication sécurisé de type SSL ou TLS.

14. Terminal mobile (20) destiné à coopérer avec une borne de recharge (12) selon la revendication 7 ou la revendication 8, comportant une application dédiée permettant, par la lecture du QR code à l'afficheur (164) de la borne de recharge (10), un affichage en clair des informations qu'il contient et une authentification des index de début et de fin de consommation électrique relatifs à la charge ou l'injection effectuée.
